# EUROPÄISCHE PATENTSCHRIFT

(11) **EP 3 835 141 B1**
(45) Veröffentlichungstag und Bekanntmachung des Hinweises auf die Patenterteilung: **14.09.2022**
(21) Anmeldenummer: 20211462.5
(22) Anmeldetag: 03.12.2020
(51) Int. Cl.: B60R 21/264

(54) **GASGENERATOR INSBESONDERE FÜR EIN FAHRZEUGSICHERHEITSSYSTEM**
GAS GENERATOR, PARTICULARLY FOR A VEHICLE SAFETY SYSTEM
GÉNÉRATEUR DE GAZ, EN PARTICULIER POUR UN SYSTÈME DE SÉCURITÉ DES VÉHICULES

(30) Priorität: 13.12.2019 DE 102019134264
(43) Veröffentlichungstag der Anmeldung: 16.06.2021
(73) Patentinhaber: ZF Airbag Germany GmbH, 84544 Aschau a. Inn (DE)
(72) Erfinder: Weber, Bernd, 84513 Erharting (DE)
(74) Vertreter: ZF Patentabteilung - DIPS

(56) Entgegenhaltungen:
- CN-Y- 201 385 637
- JP-A- H10 297 398
- JP-A- H10 297 418
- US-A- 5 851 028
- US-B1- 6 447 007

## Beschreibung

Die Erfindung betrifft einen Gasgenerator, insbesondere für ein Fahrzeugsicherheitssystem, gemäß dem Patentanspruch 1. Ferner befasst sich die Erfindung mit einem Gassackmodul mit einem solchen Gasgenerator und mit einem Fahrzeugsicherheitssystem mit einem solchen Gasgenerator.

Gasgeneratoren liefern beispielsweise Gas zum Füllen eines Gassacks oder für den Antrieb eines Gurtstraffers oder Motorhabenaufstellers.

Aus der Druckschrift US 5 851 028 A ist ein Gasgenerator für ein Fahrzeugsicherheitssystem bekannt, mit einer innerhalb des Gasgenerators positionierten Hülse, die erste Durchströmöffnungen hat und eine einen ersten Treibstoff aufweisende Anzündkammer umschließt, wobei sich außerhalb an der Hülse eine mit einem zweiten Treibstoff befüllte Brennkammer anschließt, welche von einem innerhalb des Gasgenerators gelegenen Diffusor, der zweite Durchströmöffnungen hat, umgeben ist, und mit einem Leitblech, das dritte Durchströmöffnungen hat und den Diffusor umgibt, wobei die Hülse, der Diffusor und das Leitblech miteinander stoffschlüssig verbunden sind und die Hülse als ein im Wesentlichen hohlzylindrisches Bauteil mit einer stirnseitigen ersten Öffnung und einer axial dazu gegenüberliegenden zweiten Öffnung ausgebildet ist, wobei die erste Öffnung durch den Diffusor verschlossen ist und die Hülse an ihrer zweiten Öffnung durch einen Halter verschlossen ist.
Eine derartige Konstruktion hat den Nachteil, dass nach einer Aktivierung des Gasgenerators in der Anzündkammer lediglich ein konstant bleibendes Volumen vorhanden ist in dem sich ein entsprechend schnell ausbreitender und hoher Innendruck ausbilden kann. Somit werden die einzelnen Bauteile, welche dieses Volumen umschließen, nachteilig sehr punktuell bzw. örtlich sehr begrenzt durch entsprechende Druckspitzen mechanisch belastet. Für die Auslegung gegenüber Druckbelastungen müssen diese einzelnen Bauteile entsprechend robuster und aufwändiger ausgelegt sein.

Aus der Druckschrift JP H10 297418 A ist eine Konstruktion eines Gasgenerators gezeigt, gemäß dem Oberbegriff des Patentanspruchs 1, bei der ein Gasgenerator eine innerhalb des Gasgenerators positionierte Hülse hat, die erste Durchströmöffnungen hat und eine einen ersten Treibstoff aufweisende Anzündkammer umschließt, wobei sich außerhalb an der Hülse eine mit einem zweiten Treibstoff befüllte Brennkammer anschließt, welche von einem innerhalb des Gasgenerators gelegenen Diffusor, der zweite Durchströmöffnungen hat, umgeben ist, und mit einem Leitblech, das dritte Durchströmöffnungen hat und den Diffusor umgibt, wobei hier lediglich der Diffusor und das Leitblech miteinander stoffschlüssig verbunden sind.

Aus der Druckschrift JP H10 297398 A ist ein schockabsorbierender Mechanismus für ein Kabinenfahrzeug bekannt.

Aus der Druckschrift US 6 447 007 B1 und der Druckschrift JP 09058398 A ist jeweils ein Gasgenerator nach dem Oberbegriff des Patentanspruchs 1 bekannt, wobei hier jeweils eine entsprechende Hülse als ein nicht verschiebbares Bauteil gelehrt ist, welches fest an seinen beiden Stirnseiten mit einem weiteren Bauteil des Gasgenerators verschweißt ist.

An bekannten Gasgenerator ist von Nachteil, dass diese oft einzelne komplex konstruierte Bauteile haben, welche durch eine Vielzahl von aufwändigen und teuren Verbindungstechnologien miteinander verbunden sind.

Vor diesem Hintergrund ist es Aufgabe der vorliegenden Erfindung, zumindest den vorgenannten Nachteil zu eliminieren bzw. abzuschwächen. Insbesondere soll dabei die Erfindung einen Gasgenerator angeben, bei dem eine optimierte Innendruckbelastung für druckbelastete Bauteile beim Betrieb des Gasgenerators geschaffen wird.

Ferner ist es Aufgabe der Erfindung ein weiterentwickeltes Gassackmodul und ein Fahrzeugsicherheitssystem anzugeben.

Erfindungsgemäß wird diese Aufgabe im Hinblick auf den Gasgenerator durch den Gegenstand des Gegenstandes 1, im Hinblick auf das Gassackmodul durch den Gegenstand des Patentanspruches 14 und im Hinblick auf das Fahrzeugsicherheitssystem durch den Gegenstand des Patentanspruches 15 gelöst.

Der erfindungsgemäße Gasgenerator weist eine innerhalb des Gasgenerators positionierten Hülse auf, die erste Durchströmöffnungen hat und eine einen ersten Treibstoff aufweisende Anzündkammer umschließt, wobei sich außerhalb an der Hülse eine mit einem zweiten Treibstoff befüllte Brennkammer anschließt, welche von einem innerhalb des Gasgenerators gelegenen Diffusor, der zweite Durchströmöffnungen hat, umgeben ist. Zusätzlich hat der erfindungsgemäße Gasgenerator ein Leitblech, das dritte Durchströmöffnungen hat und den Diffusor umgibt, wobei die Hülse, der Diffusor und das Leitblech miteinander stoffschlüssig verbunden sind, wobei die Hülse als ein im Wesentlichen hohlzylindrisches Bauteil mit einer stirnseitigen ersten Öffnung und einer axial dazu gegenüberliegenden zweiten Öffnung ausgebildet ist, wobei die erste Öffnung durch den Diffusor verschlossen ist und die Hülse an ihrer zweiten Öffnung durch einen Halter verschlossen ist, wobei die Hülse in einer Verschieberichtung, weg von dem Halter, an dem Halter verschiebbar ist, derart dass Bereiche des Diffusors und des Leitblechs zusammen mit der Hülse als eine Baueinheit in der Verschieberichtung verschiebbar sind.

Bei dem erfindungsgemäßen Gasgenerator sind drei Bauteile, nämlich die Hülse, der Diffusor und das Leitblech, zum einen einfach konstruiert und weisen jeweils vordefinierte Öffnungen in Form von materialdurchgängigen Öffnungen bzw. Durchbrüchen auf und zum anderen sind die drei Bauteile durch eine stoffschlüssige Verbindung fest miteinander verbunden, womit ein gegenseitiges unbeabsichtigtes Verschieben bzw. eine ungewollte geänderte Position aller drei Bauteile zueinander vermieden werden kann. Dies gilt sowohl für einen Ruhezustand des Gasgenerators, bei dem noch keine bestimmungsgemäße Aktivierung vorgenommen ist, als auch für einen Aktivierungszustand, bei dem der Gasgenerator bestimmungsgemäß aktiviert ist bzw. wurde.
Zudem ermöglicht diese stoffschlüssige Verbindung zwischen den einfach aufgebauten Einzelbauteilen Hülse, Diffusor und Leitblech, dass diese drei Einzelbauteile quasi wie eine einzige wesentlich komplexer aufgebaute Baugruppe, die sozusagen als Summe der drei Einzelbauteile aufzufassen ist, wirken kann. Im Detail ist damit gemeint, dass zum einen bereits bei der Montage des Gasgenerators dieser Umstand einen Vorteil bringen kann, indem eine derartige Baugruppe aus Hülse, Diffusor und Leitblech entsprechend hantiert bzw. behandelt werden kann. Zum anderen ist dies bei bzw. nach einer Aktivierung des Gasgenerators vorteilhaft, indem sich die stoffschlüssig miteinander verbundenen Einzelbauteile Hülse, Diffusor und Leitblech zumindest bereichsweise wie eine daraus gebildete Baugruppe verhalten bzw. wirken können, wobei dabei Bereiche des Diffusors und des Leitblechs zusammen mit der Hülse als eine Baueinheit wirkend in eine Richtung, Verschieberichtung, verschoben werden können, wie weiter unten noch detaillierter erläutert.

Insbesondere kann die Hülse, der Diffusor und das Leitblech durch eine einzige Schweißverbindung oder durch mehrere, insbesondere eine erste Schweißverbindung und eine zweite Schweißverbindung, verbunden sein, wobei vorzugsweise die Schweißverbindungen als radial umlaufende Schweißverbindungen ausgebildet sein können. In Bezug auf die Herstellung des Gasgenerators kann es von sehr großem Vorteil sein, wenn die Bauteile Hülse, Diffusor und Leitblech durch eine einzige Schweißverbindung verbunden sind, da vor dem Herstellen der Schweißverbindung lediglich eine einmalige Positionierung dieser drei Bauteile zueinander nötig ist und zudem kann diese Verbindung mit einem einzigen Schweißprozess hergestellt werden. Dies ist zeit- und kostensparend und verleiht außerdem einer solchen Konstruktion ein hohes Maß an Präzision, da nicht mehrmals hintereinander Bauteile und/oder Bauteilgruppen zueinander aufwändig vor einem Schweißprozess zueinander positioniert werden müssen. Zudem ist bei der Herstellung einer derartigen einzigen Schweißverbindung lediglich eine einzige Qualitätskontrolle, insbesondere eine Überwachung eines Schweißbades für die Schweißverbindung, notwendig. Selbst wenn stattdessen eine erste Schweißverbindung und eine zweite Schweißverbindung vorhanden sind, so bleiben doch die bereits oben genannten Vorteile bezüglich einer stoffschlüssigen Verbindung von Hülse, Diffusor und Leitblech erhalten.

Vorzugsweise kann bei dem Gasgenerator eine Verdämmung zwischen Diffusor und Hülse positioniert sein. Indem die Hülse zwei gegenüberliegende Öffnungen hat, also somit an keiner Stirnseite einen Verschluss bzw. Boden aufweist, kann sie äußerst günstig hergestellt werden. Ein Verschluss an einer Stirnseite kann kostengünstig durch den Diffusor bzw. einem Bodenabschnitt dessen erfolgen. Dabei kann es konstruktionsbedingt nötig oder vorteilhaft sein, dass eine Verdämmung, beispielsweise in Form einer dünnen Metallfolie, zwischen der Hülse und dem Diffusor positioniert bzw. eingelegt ist. Insbesondere kann bei derartiger Konstruktion die Verdämmung sogar mit der einen einzigen Schweißverbindung, welche die Hülse, Diffusor und das Leitblech miteinander verbindet, ebenfalls festgeschweißt werden und somit auch stoffschlüssig an die Hülse und den Diffusor mit angebunden bzw. verbunden werden.

Insbesondere kann der Halter einen Anzünder aufnehmen. Die Hülse kann hierbei auf den Halter aufgesteckt bzw. derart aufgepresst sein, dass sie entlang einer gewissen Längserstreckung des Halters in die Verschieberichtung, insbesondere weg von dem Halter, verschiebbar anliegt. Der Halter kann hierbei eine Art Führung bei einer Verschiebung der Hülse darstellen. Im Aktivierungs- bzw. Funktionsfall des Gasgenerators kann sich innerhalb der Anzündkammer ein Druck ausbilden, der die Verschiebung der Hülse bewirkt.

Insbesondere kann sich eine durch die ersten Durchströmöffnungen, insbesondere deren Mittelpunkte, radial erstreckende Ebene ebenfalls durch die dritten Durchströmöffnungen, insbesondere deren Mittelpunkte, erstrecken und die zweiten Durchströmöffnungen können von der Ebene beabstandet angeordnet sein. Bei der Ebene handelt es sich um eine gedachte Ebene, die sich insbesondere senkrecht zu einer Längsachse des Gasgenerators durch die ersten und dritten Durchströmöffnungen hindurch erstreckt und somit deren axiale Lage bzw. Position in dem Gasgenerator und zueinander angibt. Hierbei können die ersten Durchströmöffnungen der Hülse die ersten Öffnungen für einen Weg eines Gasstroms darstellen, welcher innerhalb der Anzündkammer erzeugbar ist, wobei die dritten Durchströmöffnungen des Leitblechs die letzten Öffnungen für diesen Gasstrom auf diesem Weg innnerhalb des Gasgenerators sein können, bevor der Gasstrom den Gasgenerator in eine Umgebung des Gasgenerators nach außen hin verlassen kann. Es können damit die ersten und die letzten Öffnungen für einen Gasstrom auf seinem Weg durch den Gasgenerator auf gleicher axialer Position liegen, wie durch die Ebene angegeben.

Vorzugsweise kann bei einer Aktivierung des Gasgenerators die Hülse mit den ersten Durchströmöffnungen in einer/der Verschieberichtung, insbesondere entlang einer Längsachse des Gasgenerators, verschoben werden, insbesondere derart, dass die Ebene außerhalb der dritten Durchströmöffnungen, insbesondere zwischen den dritten und zweiten Durchströmöffnungen, positioniert ist. Dabei kann nach Aktivierung des Gasgenerators durch einen Abbrand des ersten Treibstoffs mittels eines Anzünders innerhalb der Anzündkammer ein Druck aufgebaut werden, welcher derart hoch ansteigt, dass er trotz einer Möglichkeit eines Druckabbaus durch die ersten Durchströmöffnungen die Hülse bewegen bzw. insbesondere in Richtung weg von dem Anzünder anheben bzw. verschieben kann. Mit einer Verschiebung der Hülse werden dementsprechend auch die ersten Durchströmöffnungen in der Hülse mit verschoben, sodass die (gedachte) Ebene sich dementsprechend mit verschiebt. Der Weg einer solchen Verschiebung kann derart weit sein, dass sich die Ebene nicht mehr durch die dritten Durchströmöffnungen erstreckt.

Insbesondere hat die Hülse einen sich im Wesentlichen radial erstreckenden ersten Hülsenabschnitt, der an einem Boden des Diffusors innenseitig stoffschlüssig verbunden ist und der in einen sich zur Hülsenmittelachse hin verjüngenden konusförmigen zweiten Hülsenabschnitt übergeht, an den sich ein zur Hülsenmittelachse im Wesentlichen parallel verlaufender dritter Hülsenabschnitt anschließt, welcher insbesondere die ersten Durchströmöffnungen aufweist. Damit ist die Hülse als ein einfach herzustellender trompetenförmiger Hohlkörper aufgebaut. Mit dem dritten Hülsenabschnitt kann die Hülse auf einen/den Anzünder bzw. auf einen/den Halter des Anzünders aufgesteckt bzw. aufgeschoben sein uns so einfach von diesem an ihrer zweiten Öffnung verschlossen sein. Vorteilhaft ist die Anbringung der ersten Durchströmöffnungen im dritten Hülsenabschnitt bezüglich einer Gasausströmung bzw. eines Strömungsverlaufs eines Gases, wie weiter unten noch detaillierter beschrieben. Jedoch ist es auch denkbar, dass die ersten Durchströmöffnungen nur oder zusätzlich in dem konusförmigen zweiten Hülsenabschnitt angebracht sind.

Das Leitblech kann von einem Verschlussboden verschlossen sein und mit diesem einen Bereich des Außengehäuses des Gasgenerators ausbilden und der Verschlussboden kann zusammen mit dem Diffusor und der Hülse die Brennkammer umschließen, insbesondere derart, dass die Brennkammer als eine toroidförmige Kammer ausgebildet ist, die im Längsschnitt betrachtet vorzugsweise im Wesentlich parallel zueinander ausgerichtete Seitenwände zu dem Verschlussboden hinweisend hat, welche in Richtung von dem Verschlussboden wegweisend in schräg zueinander zulaufende Seitenwände übergehen. Durch die besondere räumliche Ausgestaltung der Brennkammer, wenn die Seitenwände der Brennkammer in einem Bereich, der von dem Verschlussboden wegweist, schräg zueinander zulaufen, verengt sich die Brennkammer in diesem Bereich. Falls in diesem Bereich der Verengung Ausströmöffnungen der Brennkammer vorgesehen sind, konkret die zweiten Durchströmöffnungen in dem Diffusor, dann kann hier vorteilhaft die Strömungsgeschwindigkeit für ein in der Brennkammer erzeugtes und aus dieser austretendes Gas optimiert, insbesondere erhöht werden. In anderen Worten ausgedrückt verläuft die Brennkammer im Längsschnitt des Gasgenerators betrachtet hier düsenartig zu, sodass eine Ausströmgeschwindigkeit für ein Gas aus der Brennkammer heraus vorteilhaft erhöht werden kann.

Insbesondere kann das Leitblech mit dem Verschlussboden und dem Diffusor mittels einer einzigen, insbesondere radial umlaufenden, Verschweißung verbunden sein und/oder die Brennkammer eine Symmetrieachse aufweisen, welche durch die zweiten Durchströmöffnungen, insbesondere deren Mittelpunkte, im Wesentlichen parallel zur Längsachse des Gasgenerators verläuft. Auch hier ist es vorteilhaft, drei Bauteile bei der Herstellung des Gasgenerators kosten- und zeitsparend miteinander stoffschlüssig zu verbinden, da bei einer derartigen einzigen Schweißverbindung lediglich ein einziger Arbeitsschritt und/oder eine einzige Qualitätskontrolle hierzu, insbesondere eine Überwachung eines Schweißbades für die Schweißverbindung, notwendig ist. Zudem, wenn die Brennkammer derart symmetrisch aufgebaut ist, dass durch die zweiten Durchströmöffnungen, durch die ein in der Brennkammer erzeugtes Gas ausströmen kann bzw. soll, eine Symmetrieachse verläuft, dann kann vorteilhaft das Gas äußerst gleichmäßig aus dieser Brennkammer durch die zweiten Durchströmöffnungen ausströmen.

Das Leitblech kann topfförmig ausgebildet sein und einen zylinderförmigen ersten Wandabschnitt haben, an den sich ein konusförmiger nach radial innen verengender zweiter Wandabschnitt anschließt, welcher in einen Bodenabschnitt im Wesentlichen senkrecht zur Längsachse des Gasgenerators übergeht, wobei das Leitblech vorzugsweise eine Vertiefung im Bodenabschnitt und/oder die dritten Durchströmöffnungen als schlitzartige im Wesentlichen rechteckförmige Öffnungen aufweist. Durch den sich konusförmige nach radial innen verengenden zweiten Wandabschnitt wird außerhalb dieses Wandabschnitts im Vergleich zu dem zylinderförmigen ersten Wandabschnitt mehr Raum für angrenzende Bauteile geschaffen. Insbesondere, wenn das Leitblech hier einen Bereich des Außengehäuses bildet, ist dies der Fall. Konkret kann der Gasgenerator in ein ihn umgebendes Modul mit einem von dem Gasgenerator auszublasenden Gassack platzsparender eingebaut werden. Anders ausgedrückt beansprucht der Gasgenerator in dem konusförmigen Bereich weniger Bauraum gegenüber benachbarten Bauteilen nach außen hin, als dies in dem zylindrischen Bereich des ersten Wandabschnitts des Leitblechs der Fall ist. Die Vertiefung im Bodenabschnitt des Leitblechs kann vorteilhaft für eine Positionierung und/oder Zentrierung des Gasgenerators genutzt werden, indem die Vertiefung komplementär wirkend in einen Vorsprung eines benachbarten Bauteils, wie beispielsweise dem vorgenannten Modul, eingreifen kann. Zudem bzw. alternativ dazu kann die Vertiefung als eine konstruktive Maßnahme für eine Erhöhung der Wandsteifigkeit des Leitblechs dienen, was in einem Fall einer elastischen und/oder plastischen Verformung des Leitblechs in diesem Bereich durch einen ansteigenden Innendruck im Gasgenerator nach einer Aktivierung des Gasgenerators von Vorteil ist. Indem das Leitblech auch stoffschlüssig mit dem Diffusor verbunden ist, kann sich dieser Vorteil quasi auch auf den Diffusor übertragen. Gemeint ist damit, dass sich die Erhöhung der Wandsteifigkeit des Leitblechs damit auch entsprechend positiv quasi wie eine Erhöhung der Wandsteifigkeit für den Diffusor auswirkt, da Diffusor und Leitblech entsprechend kräfteübertragend stoffschlüssig miteinander verbunden sind. Durch eine Ausbildung der dritten Durchströmöffnungen als schlitzartige im Wesentlichen rechteckförmige Öffnungen, kann nach einer Aktivierung des Gasgenerators ein innerhalb des Gasgenerators erzeugtes Gas, welches in die Umgebung des Gasgenerators abgeführt werden soll, äußerst vorteilhaft durch derartig ausgebildete dritte Durchströmöffnungen geleitet werden.

Der Diffusor kann topfförmig ausgebildet sein und einen zylinderförmigen ersten Abschnitt haben, an den sich ein konusförmiger nach radial innen verengender zweiter Abschnitt anschließt, welcher in einen/den Boden des Diffusors im Wesentlichen senkrecht zur Längsachse des Gasgenerators übergeht und die zweiten Durchströmöffnungen aufweist. Durch diese Ausgestaltung kann insbesondere die oben genannte vorteilhafte Form der Brennkammer erreicht werden.

Insbesondere können das Leitblech und der Diffusor eine topfförmige Gasleitkammer umschließen und/oder über den gesamten Bereich der/einer Gasleitkammer im Wesentlichen parallel zueinander verlaufen, die/eine Vertiefung des Leitblechs davon ausgenommen. Durch derartige Konstruktion bzw. Konstruktionen kann erreicht werden, dass ein aus der Brennkammer in die Gasleitkammer eingeleitetes heißes Gas möglichst gleichförmig und über einen relativ langen Weg in der Gasleitkammer leitbar ist, der genügend Möglichkeiten für eine effektive Filterung und/oder Abkühlung des Gases bietet, bevor das Gas durch die dritten Durchströmöffnungen des Leitblechs in die Umgebung des Gasgenerators abgegeben werden kann. Dadurch, dass die Gasleitkammer topfförmig ausgebildet ist, stehen also nicht nur Seitenbereiche der Gasleitkammer hierzu zur Verfügung, sondern auch quasi "Deckenbereiche" der Gasleitkammer. Anders ausgedrückt erstreckt sich eine derartige Gasleitkammer in eine axiale und eine radiale Richtung.

Vorzugsweise kann im Aktivierungsfall des Gasgenerators ein in der Anzündkammer gebildetes Gas nur in radialer Richtung durch die ersten Durchströmöffnungen der Hülse in die Brennkammer einströmen und ein in der Brennkammer gebildetes Gas nur in axialer Richtung durch die zweiten Durchströmöffnungen des Diffusors in die/eine Gasleitkammer einströmen, wobei insbesondere dabei Bereiche des Diffusors und des Leitblechs zusammen mit der Hülse als eine Baueinheit in Verschieberichtung verschoben werden können. Durch eine derartige Richtungsvorgabe des Gases, kann dieses Gas mit einer Richtungsumlenkung und über einen relativ langen Weg innerhalb des Gasgenerators geleitet werden, wobei hierbei vorteilhaft Möglichkeiten für eine effektive Filterung und/oder Abkühlung des Gases gegeben sind, beispielsweise durch eine effektive gewünschte Schlackeablagerung aus dem Gas, welches Schlacke/Partikelteile mitführen kann.
Dadurch, dass Bereiche des Diffusors und des Leitblechs zusammen mit der Hülse als eine Baueinheit in Verschieberichtung verschoben werden können, wirken diese Bereiche des Diffusors und des Leitblechs mit der Hülse zusammen quasi wie ein einziger bzw. gemeinsamer topfförmiger Behälter welcher von dem Verschlussboden verschlossen ist, wobei nach eine Aktivierung des Gasgenerators ein danach entstehender Innendruck diese Baueinheit druckausgleichend anheben bzw. in Verschieberichtung verformen kann. In anderen Worten, nach einer Aktivierung des Gasgenerators kann durch einen Abbrand der Treibstoffe ein derart hoher Innendruck im Gasgenerator erzeugt werden, dass sich Bereiche seines Außengehäuses in gewissen geringen Maße ausbauchen bzw. elastisch und/oder plastisch verformen können, was bestimmungsgemäß gewünscht sein kann. Eine derartige Verformung kann durch vorbeschriebene Verschiebung der Baueinheit umfassend den Diffusor, das Leitblech und die Hülse vorteilhaft ausgeführt bzw. materialschonend bewerkstelligt werden, da keine singulären Einzelbauteile punktuell zu stark belastet werden, sondern die Baueinheit für sich genommen mechanisch optimierter belastet werden kann.

Ein nebengeordneter Aspekt der Erfindung betrifft ein Gassackmodul mit einem Gasgenerator, einem von dem Gasgenerator aufblasbaren Gassack und einer Befestigungseinrichtung zur Anbringung des Gassackmoduls an einem Fahrzeug, wobei der Gasgenerator vorzugsweise gemäß der zuvor beschriebenen Art und Weise ausgebildet ist.

Ferner wird im Rahmen der vorliegenden Anmeldung ein Fahrzeugsicherheitssystem, insbesondere zum Schutz einer Person, beispielsweise eines Fahrzeuginsassen oder Passanten, mit einem Gasgenerator, einem von diesem aufblasbaren Gassack, als Teil eines Gassackmoduls, und einer elektronischen Steuereinheit, mittels der der Gasgenerator bei Vorliegen einer Auslösesituation aktivierbar ist, offenbart und beansprucht. Bei dem erfindungsgemäßen Fahrzeugsicherheitssystem ist vorzugsweise der Gasgenerator gemäß der zuvor beschriebenen Art und Weise ausgebildet.

Die Erfindung wird im Folgenden anhand von Ausführungsbeispielen unter Bezugnahme auf die beigefügten, schematischen Figuren näher erläutert:
Darin zeigen:
Fig. 1 eine Längsschnittansicht durch einen erfindungsgemäßen Gasgenerator und
Fig. 2 eine dreidimensionale Darstellung des Gasgenerators, wie er in Fig. 1 dargestellt.

Im Folgenden werden für gleiche und gleichwirkende Teile dieselben Bezugsziffern verwendet.

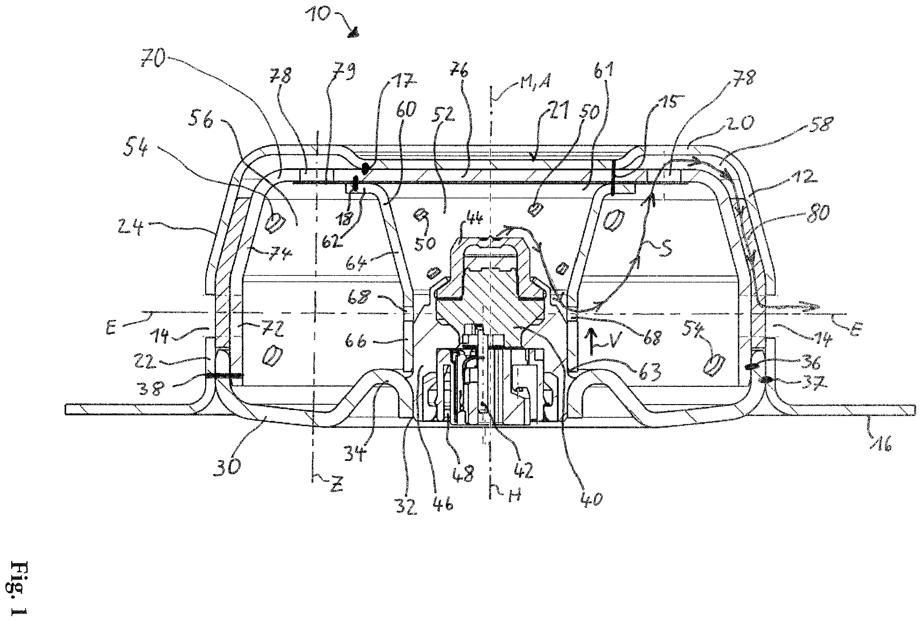

Fig. 1 zeigt einen Längsschnitt durch einen erfindungsgemäßen Gasgenerator 10 mit einer Längsachse A entlang derer er sich axial erstreckt und einer Mittelachse M, wobei die Achsen A in Fig. 1 derart dargestellt ist, dass sie mit der Mittelachse M deckungsgleich positioniert ist. Der Gasgenerator 10 hat ein topfförmiges Leitblech 12 mit einem Bodenabschnitt 20, und dritten Durchströmöffnungen 14, die als materialdurchgängige Öffnungen bzw. Durchbrücke in dem Leitblech 12 angebracht sind. Ein Verschlussboden 30 verschließt das Leitblech 12 auf der dem Bodenabschnitt 20 gegenüberliegenden offenen Seite des Leitblechs 12. Das Leitblech 12 und der Verschlussboden 30 bilden zusammen einen Teil eines Außengehäuses des Gasgenerators 10. Das Leitblech 12 weist, insbesondere mittig im Bereich seines Bodens 20, eine Vertiefung 21 auf, die als eine Eindrückung des Bodens 20 nach in Richtung des Innenraums des Leitblechs 12 aufzufassen ist. Der Verschlussboden 30 weist eine insbesondere mittige Öffnung 32 auf, die von einem Halter 46 und einem von dem Halter 46 aufgenommenen Anzünder 40 verschlossen ist. Innerhalb des Gasgenerators 10 ist eine Hülse 60 an dem Halter 46 befestigt, wobei insbesondere der Halter 46 einen im Wesentlichen zylinderförmigen Abschnitt aufweist, auf den die Hülse 60 mit einem entsprechend komplementär zu dem Abschnitt geformten, im Wesentlichen hohlzylindrischen, dritten Hülsenabschnitt 66 aufgesteckt ist, derart, dass die Hülse 60 entlang einer Längserstreckung des Halters 46 bzw. entlang des zylinderförmigen Abschnitts des Halters 46 in einer Verschieberichtung V, weg von dem Verschlussboden 30, verschiebbar gelagert ist. An die im Wesentlichen parallele Seitenwand des dritten Hülsenabschnitts 66, schließt sich ein zweiter Hülsenabschnitt 64 an, welcher sich mit zunehmender Entfernung von dem dritten Hülsenabschnitt 66 konusförmig nach außen hin, also weg von einer zentralen Hülsenmittelachse H, erstreckt. Der zweite Hülsenabschnitt 64 geht schließlich in einem Endbereich der Hülse 60 in einen sich nach radial außen, im Wesentlichen senkrecht zur Hülsenmittelachse H, erstreckenden ersten Hülsenabschnitt 62 über, der nach innen hin eine erste Öffnung 61 der Hülse 60 umschließt. Die Hülse 60 ist als ein nach beiden Stirnseiten hin offener Hohlkörper ausgebildet, welcher auf einer Stirnseite die erste Öffnung 61 und auf der dazu gegenüberliegenden Stirnseite eine zweite Öffnung 63 hat, die von einem entsprechenden Endbereich des dritten Hülsenabschnitts 66 umschlossen ist. Die Hülse 60 kann auch demnach als ein trompetenförmiger Hohlkörper aufgefasst werden.

Die Hülse 60 ist mit ihrem ersten Hülsenabschnitt 62 an einen innerhalb des Gasgenerators 10 gelegenen Diffusor 70, der zweite Durchströmöffnungen 78 aufweist, insbesondere dort an einem Boden 76 des Diffusors 70, befestigt. Eine Verdämmung 79, insbesondere als dünne Metallfolie aus z.B. Stahl, Kupfer oder Aluminium, verschließt die zweiten Durchströmöffnungen 78 des Diffusors 70, in einem Ruhezustand des Gasgenerators 10, in dem der Gasgenerator nicht bzw. noch nicht bestimmungsgemäß aktiviert ist bzw. wurde.

Dabei kann die Verdämmung 79 zwischen der Hülse 60 und dem Diffusor 70 als Zwischen dem Diffusor 70 und dem Leitblech 12 ist ein ringförmiger Filter 80 positioniert, insbesondere ist er zwischen diesen beiden Bauteilen eingeklemmt, verpresst und/oder kraft- und oder formschlüssig angebunden. Der Filter 80 weist dabei eine komplementär zu seinen Anlageflächen an diese beiden Bauteile ausgebildete Form auf. Insbesondere ist dabei der Filter 80 als ein Hohlkörper aufzufassen, der einen zylindrischen Bereich hat, der insbesondere in Form eines geraden Kreiszylinders ausgebildet ist, wobei sich daran ein kegelstumpfförmiger Bereich anschließt, mit einer Seitenwand, welche konusförmig nach radial innen zuläuft. Der Filter 80 kann aus Metall, insbesondere in Form eines Maschengestricks, Wickels oder einlagig bzw. mehrlagigen Blechelementen aufgebaut sein und hat die Aufgabe ein aus dem Gasgenerator 10 ausströmendes Gas zu kühlen und/oder hinsichtlich Partikel zu filtern. Der Filter 80 kann beispielsweise bei der Herstellung des Gasgenerators zunächst auf den Diffusor 70 aufgesteckt oder aufgepresst werden und danach kann das Leitblech 12 von außen her, den Filter 80 umgebend, auf den Filter 80 aufgesteckt bzw. aufgepresst oder an diesen angepresst verbindend befestigt werden.

Die Hülse 60 weist erste Durchströmöffnungen 68 auf, welche insbesondere in dem dritten Hülsenabschnitt 66 als einzelne materialdurchgängige Öffnungen bzw. Durchbrüche, vorzugsweise in Form von kreisförmigen Löchern ausgebildet sind. Die Anzahl der ersten Durchströmöffnungen 68 beträgt vier, kann jedoch geringer oder auch größer ausfallen, wobei die ersten Durchströmöffnungen 68 bevorzugt auf einer gleichen axialen Höher radial umlaufend an der Hülse 60 angebracht sind. Die ersten Durchströmöffnungen 68, oder zumindest einige davon, könnten auch in dem zweiten Hülsenabschnitt 64 der Hülse 60 angeordnet sein. Die ersten Durchströmöffnungen 68 stellen eine Verbindung für ein Gas zwischen der Anzündkammer 52 und der Brennkammer 56 dar, und sind vorzugsweise bereits in einem Ruhezustand des Gasgenerators 10 unverschlossen. Es ist jedoch auch denkbar, dass die erste Durchströmöffnungen 68 mit einer Metallfolie verschlossen sind (nicht dargestellt) und im Funktionsfall, nachdem der Gasgenerator 10 aktiviert wurde, durch einen in der Anzünderkammer 52 ansteigenden Innendruck geöffnet werden, indem die Metallfolie zerreißt bzw. lokal zerstört wird.

Im Folgenden wird ein Strömungsverlauf S eines Gases innerhalb des Gasgenerators nach dessen bestimmungsgemäßer Aktivierung beschrieben. Der Einfachheit halber wird im Folgenden lediglich von einem Gas bzw. einer Strömung eines Gases oder einer Gasströmung gesprochen, wobei hier immer ein innerhalb des Gasgenerators gebildetes Gas und eine mögliche Beimischung von Partikeln in diesem Gases gemeint ist, da durch einen Abbrand bzw. einer Zersetzung eines Treibstoffs neben einem heißen Gas auch zusätzliche meist heiße Partikel erzeugt werden, die diesem Gas beigesetzt sein können.

Bei einer Aktivierung des Gasgenerators 10 wird der Anzünder 40, der ein oder mehrere, insbesondere zwei, Kontaktelemente 42 hat, mittels eines Stromimpulses ausgelöst bzw. aktiviert. Dabei ist ein Stecker, der mit einem Steuergerät verbunden ist (beide nicht dargestellt) an den Gasgenerator 10, insbesondere in eine Steckerschnittstelle 48 eingesteckt und überträgt den Stromimpuls von dem Steuergerät an bzw. in den Anzünder 40, der in seinem Inneren ein druck- und/oder partikelausbildendes Element, wie z.B. eine Pyrotechnik, aufweist, das von einer Kappe 44 des Anzünders 40 umgeben ist. Nach Auslösung des Anzünders 40 wird ein derart hoher Druck innerhalb des Anzünders 40 aufgebaut, dass die Kappe 44 öffnet bzw. aufbricht, wobei Gas in die Anzündkammer 52 freigesetzt wird, um den ersten Treibstoff 50 anzuzünden. In Fig. 1 ist ein möglicher Weg einer Strömung des Gases durch eine langgestreckte dementsprechend geformte Linie, welche mit Richtungspfeilen für einen solchen Strömungsverlauf S durchsetzt ist, dargestellt. Durch die Anzündung des ersten Treibstoffs 50 wird ebenfalls Gas erzeugt, das durch die ersten Durchströmöffnungen 68 aus der Anzündkammer 52 in die Brennkammer 56 eintreten bzw. einströmen kann.

Das in die Brennkammer 56 eingeströmte Gas kann danach den dort befindlichen zweiten Treibstoff 54 anzünden, wobei dieser ebenfalls durch seinen Abbrand weiteres Gas generiert bzw. erzeugt, welches durch einen ansteigenden Druck die Verdämmung 79 aufbricht und eine Ausströmung des Gases durch die zweiten Durchströmöffnungen 78 des Diffusors 70 aus der Brennkammer 56 heraus ermöglicht.

Das aus der Brennkammer 56 austretende Gas strömt danach in eine Gasleitkammer 58 ein, welche von dem Leitblech 12, als äußere Begrenzung, und dem Diffusor 70, als innere Begrenzung, umschlossen ist. Das Leitblech 12 ist dabei in dem Bereich seiner Vertiefung 21 kontaktierend mit dem Diffusor 70 verbunden, sodass sich in diesem Bereich keine Gasleitkammer ausbilden kann. Demnach kann die Gasleitkammer 58 als eine topfförmige Kammer aufgefasst werden, wobei im vorgenannten Bereich der Vertiefung 21 quasi ein Bodenbereich dieser Kammer ausgespart ist. Insbesondere verlaufen über den gesamten Bereich der Gasleitkammer 58 das Leitblech 12 und der Diffusor 70 im Wesentlichen parallel zueinander, wobei die Vertiefung 21 davon auszunehmen bzw. nicht mit zu betrachten ist.

Das Gas wird nach seiner Einströmung in die Gasleitkammer 58 entlang der Kontur des Leitblechs 12 und Diffusors 70 durch den Filter 80 hindurch geleitet, bis hin zu den dritten Durchtrittsöffnungen 14 des Leitblechs 12, durch die es danach hindurch in einen Außenbereich bzw. in die Umgebung des Gasgenerators 10 tritt bzw. dorthin strömt.

Insgesamt kann vorgenannte Erzeugung und Leitung des Gases anhand des Pfeilsymbols für den Strömungsverlauf S auch bezüglich der Richtung, insbesondere bezüglich einer, vorteilhaft mehrere Richtungswechsel des Strömungsverlaufs S wie folgt beschrieben werden.

Nach einer Aktivierung des Gasgenerators 10 wird zunächst durch ein Aufbrechen der Kappe 44 des Anzünders 40 eine erste Menge an Gas in die Anzündkammer 52 freigesetzt, im Wesentlichen in Richtung des Bodens 76 des Diffusors 70, welcher der aufbrechenden Kappe 44 gegenüber liegt. Danach folgt nach einer relativ kurzen Wegstrecke eine erste Umkehr des Strömungsverlaufs S im Wesentlichen um 180° in Richtung der ersten Durchströmöffnungen 68 der Hülse 60. Dieser Strömungsverlauf ist dem Umstand geschuldet, dass die ersten Durchströmöffnungen 68 die einzigen Öffnungen sind, durch die das Gas aus der Anzündkammer 52 ausströmen kann. Hierbei kommt ein besonderer Vorteil der speziellen konusförmig ausgeprägten Anzündkammer 52 bzw. des entsprechend konusförmigen Bereichs der Hülse 60 zum Tragen. Indem nämlich der zweite Hülsenabschnitt 64 entsprechend verjüngend zur Hülsenmittelachse H zuläuft, kann ein in der Anzündkammer 52 erzeugtes Gas, insbesondere Anzündgas zur Anzündung des zweiten Treibstoffs 54 extrem schnell in Richtung bzw. durch die ersten Durchströmöffnungen 68 geleitet werden. Durch vorgenannte konusförmige Ausprägung ergibt sich nämlich zu den ersten Durchströmöffnungen 68 hin bzw. in deren Umgebung innerhalb der Anzündkammer 52 eine düsenartige Verengung bzw. ein düsenartig geformter ringförmiger Kanal hin zu den ersten Durchströmöffnungen 68. Dadurch kann das Gas in Richtung erster Durchströmöffnungen 68 vorteilhaft beschleunigt werden, um durch die ersten Durchströmöffnungen 68 möglichst schnell hindurchzutreten, um möglichst effektiv und mit entsprechend effizient großer Wirkung den zweiten Treibstoff 54 in der Brennkammer 56 anzuzünden.

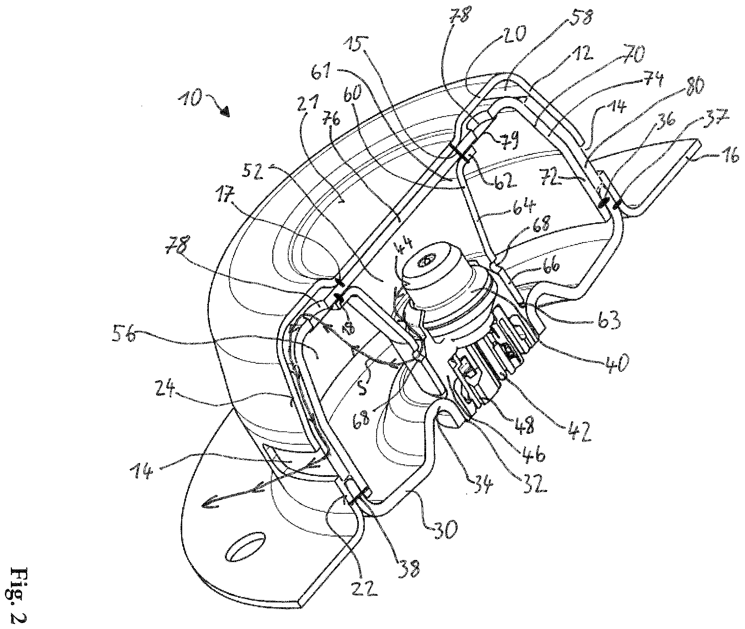

Die Hülse 60, der Diffusor 70 und das Leitblech 12 sind miteinander stoffschlüssig verbunden. Hierbei ist es möglich, dass diese drei Bauteile durch eine einzige Verbindung, insbesondere eine einzige Schweißverbindung 15 untereinander verbunden sind. Die Schweißverbindung 15 ist dabei als eine radial umlaufende Schweißung bzw. Verschweißung vorgesehen, welche sich durch die Materialien aller drei Bauteile erstreckt und kann insbesondere als eine Laserschweißung ausgeführt sein. Bei der Herstellung des Gasgenerators 10 können dazu die drei Bauteile Hülse 60, Diffusor 70 und Leitblech 12 dementsprechend zueinander positioniert werden. Danach kann mittels einer geeigneten Lasereinstellung, insbesondere Fokuseinstellung eines Schweißlasers, vom Innenbereich des Diffusors 70 her oder vom Äußeren des Leitblechs 12 her ein Laserstrahl dementsprechend auf die drei Bauteile einwirken, dass in einem einzigen Schmelzbereich, der durch das Bezugszeichen 15 symbolisch nur auf einer Seite in den Darstellungen von Fig. 1 und 2 dargestellt ist, die drei Bauteile miteinander stoffschlüssig verbunden werden.

Alternativ dazu können Hülse 60, Diffusor 70 und Leitblech 12 auch durch mehrere Schweißverbindungen, insbesondere eine erste Schweißverbindung 17 und eine zweite Schweißverbindung 18, miteinander stoffschlüssig verbunden sein. Hierbei kann das Leitblech 12 mit dem Diffusor 70 durch die erste Schweißverbindung 17 und der Diffusor 70 mit der Hülse 60 mittels der zweiten Schweißverbindung 18 verbunden sein. Auch hier klönnen die erste und zweite Schweißverbindung 17, 18 als radial umlaufende Schweißverbindungen ausgebildet sein und sind in den Figuren nur symbolisch auf einer Seite durch eine entsprechende Materialverbindung dargestellt.

Damit sind Hülse 60, Diffusor 70 und Leitblech 12 fest und unverschieblich zueinander verbunden und können so vorteilhaft als quasi ein zusammengesetztes ganzes Bauteil wirken. Insbesondere kann während der Herstellung des Gasgenerators diese Bauteilgruppe umfassend Hülse 60, Diffusor 70 und Leitblech 12 als eine vormontierte Baugruppe hantiert werden.

Weiters können dabei insbesondere Bereiche des Diffusors 70 und des Leitblechs 12 zusammen mit der Hülse 60 als eine Baueinheit in Verschieberichtung V verschoben werden. Gemeint ist damit, dass bei bzw. nach einer Aktivierung des Gasgenerators 10 ein sich innerhalb der Anzündkammer 52 und/oder innerhalb der Brennkammer 56 ausbildender ansteigender Druck Bereiche des Diffusors 70 und des Leitblechs 12 nach außen hin elastisch und/oder plastisch verformen kann. Anders ausgedrückt bauchen diese Bereiche aus bzw. werden nach außen hin verformt. Eine derartige Verformung kann bestimmungsgemäß gewünscht sein. Zudem kann eine Verschiebung der Hülse 60 in Verschieberichtung V ebenfalls gewünscht sein, damit beispielsweise die ersten Durchströmöffnungen 66 der Hülse 60 ebenfalls in Verschieberichtung V mit verschoben werden, um den zweiten Treibstoff 54 über eine gewisse längere axiale Wegstrecke durch das heiße Gas, das durch die ersten Durchströmöffnungen 66 in die Brennkammer 56 einströmt effektiver anzünden zu können. Anders ausgedrückt wird ein heißer Gasstrahl, der durch die ersten Durchströmöffnungen 66 in die Brennkammer 56 einströmt durch eine Verschiebung der Hülse 60 über eine gewisse axiale Wegstrecke entlang der Vielzahl der Treibstoffkörper in der Brennkammer 56 sozusagen entlangstreichen und diese großflächiger bzw. effektiver anzünden.

Beide vorgenannten gewünschten Effekte bzw. dynamischen Prozesse, nämlich das Ausbauchen bzw. Verformen von Leitblech 12 und Diffusor 70 und die Verschiebung der Hülse 60 in Verschieberichtung V kann vorteilhaft präzise und ohne großen Aufwand dadurch realisiert werden, dass die drei Bauteile Hülse 60, Diffusor 70 und Leitblech 12 miteinander stoffschlüssig verbunden sind. Die drei Bauteile können nämlich nicht ungewollt bei den vorgenannten dynamischen Prozessen zueinander nachteilig verschoben bzw. verformt werden. Insbesondere werden Leitblech 12 und Diffusor 70 quasi zusammen wie ein einziges Bauteil wirkend verformt bzw. nach außen hin ausbauchend bewegt und die Hülse 60 wird quasi angeheftet an diese beiden Bauteile gleich bei dieser Bewegung mit verschoben, ohne dass eine ungewollte Displazierung der Hülse 60, wie beispielsweise eine Undichtigkeit in Form eines Spaltes zwischen ersten Hülsenabschnitt 62 und dem Diffusor 70, entstehen könnte.

Fig. 1 stellt insbesondere eine Ruhestellung des Gasgenerators 10 dar, bei der noch keine Aktivierung bzw. bestimmungsgemäße Auslösung des Gasgenerators 10 stattgefunden hat. Die vorgenannten dynamischen Prozesse nach einer Aktivierung des Gasgenerators 10, nämlich das Ausbauchen bzw. Verformen von Leitblech 12 und Diffusor 70 und die Verschiebung der Hülse 60 in Verschieberichtung V sind nicht extra für sich dargestellt. Wie in Fig. 1 ersichtlich, erstreckt sich im Ruhezustand des Gasgenerators 10 eine Ebene E durch die ersten Durchströmöffnungen 68 der Hülse 60, insbesondere deren Mittelpunkte, in radialer Richtung, wobei sich die Ebene E ebenfalls durch die dritten Durchströmöffnungen 14 des Leitblechs 12, insbesondere deren Mittelpunkte, erstreckt. Die zweiten Durchströmöffnungen 78 des Diffusors 70 sind von der Ebene E beabstandet angeordnet. Die Ebene E ist als eine gedachte vorbeschriebene Ebene zu verstehen. Bei einer Aktivierung des Gasgenerators 10 kann die Hülse 60 mit den ersten Durchströmöffnungen 68 in der Verschieberichtung V verschoben werden, derart dass die Ebene E außerhalb der dritten Durchströmöffnungen 14 zwischen den dritten und zweiten Durchströmöffnungen 14, 78 positioniert ist. Die Ebene E wird dadurch quasi nach oben (Bezug zu Fig. 1) in Richtung der zweiten Durchströmöffnungen 78 verschoben.

Das Leitblech 12 kann mit dem Verschlussboden 30 und dem Diffusor 70 mittels einer einzigen radial umlaufenden Verschweißung 38 verbunden sein, wie dies in den Figuren jeweils symbolisch nur auf einer Seite (links in den Figuren) angedeutet ist. Hierdurch ergeben sich ähnliche Vorteile wie dies bereits weiter oben bezüglich der einzigen Schweißverbindung 15 beschrieben ist. Zudem ergibt sich hier bei der einen einzigen Verschweißung 38 noch der Vorteil, dass damit auch zwei Bauteile, die den Großteil des Außengehäuses des Gasgenerators 10 umfassen, nämlich Leitblech 12 und Verschlussboden 30, als quasi den Gasgenerator 10 umfassende schalenförmige Bauteile druckfest verbunden werden können. In anderen Worten, durch die einzige Verschweißung 38 können nicht nur ein Großteil des Außengehäuses hergestellt, sondern zugleich auch noch ein drittes, bei einer Aktivierung des Gasgenerators 10 druckbelastetes, Bauteil, nämlich der Diffusor 70, stoffschlüssig mit befestigt werden.

Alternativ dazu können die drei Bauteile Leitblech 12, Verschlussboden 30 und Diffusor 70 auch stoffschlüssig miteinander verbunden dadurch werden, indem zwei separate Schweißungen vorgenommen werden, nämlich eine erste Schweißnaht 36 zwischen Diffusor 70 und Verschlussboden 30 und eine zweite Schweißnaht 37 zwischen Verschlussboden 30 und Leitblech 12. Beide Schweißnähte 36 und 37 können dabei als radial umlaufende Verschweißungen ausgeführt sein.

Wie in Fig. 1 dargestellt, weist die Brennkammer 56 eine Symmetrieachse Z auf, welche durch die zweiten Durchströmöffnungen 78, insbesondere deren Mittelpunkte, im Wesentlichen parallel zur Längsachse A des Gasgenerators 10 verläuft. Indem die Brennkammer 56, wie in Fig. 1 ersichtlich, derart symmetrisch aufgebaut ist, kann vorteilhaft das Gas im Aktivierungsfall äußerst gleichmäßig in der Brennkammer 56 durch Abbrand des zweiten Treibstoffs 56 erzeugt und anschließend auch homogen bzw. gleichmäßig innerhalb der Brennkammer 56 geleitet und auch derart durch die zweiten Durchströmöffnungen 78 aus der Brennkammer 56 ausströmen.

Das Leitblech 12 ist topfförmig ausgebildet und hat einen zylinderförmigen ersten Wandabschnitt 22, an den sich ein konusförmiger nach radial innen verengender zweiter Wandabschnitt 24 anschließt, welcher in den Bodenabschnitt 20 im Wesentlichen senkrecht zur Längsachse A des Gasgenerators 10 übergeht. Der Diffusor 70 weist über einen Großteil seiner Form, verglichen mit vorbeschriebener Form bzw. Ausgestaltung des Leitblechs 12 einen relativ ähnlichen Verlauf bzw. eine ähnlich komplementäre Kontur auf, wie in Fig. 1 gut zu erkennen ist.

Auch der Diffusor ist nämlich topfförmig ausgebildet und hat einen zylinderförmigen ersten Abschnitt 72, an den sich ein konusförmiger nach radial innen verengender zweiter Abschnitt 74 anschließt, welcher in den Boden 76 des Diffusors 70 im Wesentlichen senkrecht zur Längsachse A des Gasgenerators 10 übergeht. Dadurch verlaufen Leitblech 12 und Diffusor 70, bzw. deren Konturen, entlang einer relativ großen Wegstrecke, nämlich im Wesentlichen entlang der Erstreckung der Gasleitkammer 58, welche durch diese beiden Bauteile ausgebildet ist, im Wesentlichen parallel zueinander. Dadurch ist die Gasleitkammer 58 sehr homogen aufgebaut, bzw. eine Gasführung durch die Gasleitkammer 58 kann vorteilhaft homogen erfolgen.

Der Verschlussboden 30 weist eine Wölbung 34 auf, welche nach einer Aktivierung des Gasgenerators 10 als eine Art federelastisches Element dienen kann. Indem nämlich auch hier durch einen ansteigenden Innendruck in dem Gasgenerator 10 der Verschlussboden 30 ein Stück weit nach außen elastisch und/oder plastisch verformt werden kann, dient die Wölbung 34 als eine Art dynamisch belastbares Ausgleichselement, welches zumindest einen gewissen Anteil einer Verformung aufnehmen bzw. abfedern kann. Die Wölbung 34 kann sich dabei in Richtung Außenbereich des Gasgenerators 10 durchbiegen (nicht dargestellt) und einen Anteil von entsprechenden Verformungskräften aufnehmen bzw. kompensieren.

Das Leitblech 12 hat einen nach außen radial abstehenden Rand bzw. Kragen, der als ein Flansch 16 ausgebildet ist und für die Montage des Gasgenerators 10 an weiteren Bauteilen (nicht dargestellt) dienen kann, beispielsweise Bauteile eines Gassackmoduls oder Fahrzeugs. Hierzu kann der Flansch 16 Öffnungen oder Durchbrüche haben (nicht dargestellt).

Insbesondere sind die dritten Durchströmöffnungen 14 des Leitblechs 12 als schlitzartige im Wesentlichen rechteckförmige Öffnungen ausgebildet. Konkret erstrecken sich sechs dieser Öffnungen radial umlaufend, vorzugsweise in gleichen Abständen zueinander, um den Umfang des Leitblechs 12. Derartige Öffnungen ermöglichen ein großflächiges sanfteres Ausströmen eines Gases aus dem Gasgenerator 10 in seine Umgebung, als es bei kleineren mehreren Öffnungen der Fall wäre. Insbesondere werden dadurch die großflächigen dritten Durchströmöffnungen 14 bzw. das diese Öffnungen umgebende Material des Leitblechs 12 nicht so stark erodierend durch ein schnell ausströmendes Gas belastet.

Fig.2 zeigt dieselbe Ausführungsform des Gasgenerators 10, wie er in Fig. 1 dargestellt ist, in perspektivischer Ansicht. Hierbei werden für gleiche und gleichwirkende Teile dieselben Bezugsziffern wie in Fig. 1 verwendet. Insbesondere ist in Fig. 2 noch eine Öffnung bzw. Bohrung in dem Flansch 16 des Leitblechs 12 dargestellt, welche für eine Befestigung des Gasgenerators 10 an einem Gassackmodul (nicht dargestellt) dienen kann. Zudem ist in Fig. 2 eine mögliche Ausgestaltung einer dritten Durchströmöffnung 14 des Leitblechs 12 ersichtlich, welche, wie weiter oben schon beschrieben, als eine langgestreckte rechteckförmige Öffnung bzw. als eine entsprechende schlitzartige Öffnung ausgebildet sein kann.

### Bezugszeichen

- 10: Gasgenerator
- 12: Leitblech
- 14: Dritte Durchströmöffnung
- 15: Schweißverbindung
- 16: Flansch
- 17: erste Schweißverbindung
- 18: zweite Schweißverbindung
- 20: Bodenabschnitt
- 21: Vertiefung
- 22: Erster Wandabschnitt
- 24: Zweiter Wandabschnitt
- 30: Verschlussboden
- 32: Öffnung
- 34: Wölbung
- 36: erste Schweißnaht
- 37: zweite Schweißnaht
- 38: Verschweißung
- 40: Anzünder
- 42: Kontaktelement
- 44: Kappe
- 46: Halter
- 48: Steckerschnittstelle
- 50: erster Treibstoff
- 52: Anzündkammer
- 54: zweiter Treibstoff
- 56: Brennkammer
- 58: Gasleitkammer
- 60: Hülse
- 61: Erste Öffnung
- 62: Erster Hülsenabschnitt
- 63: Zweite Öffnung
- 64: Zweiter Hülsenabschnitt
- 66: Dritter Hülsenabschnitt
- 68: Erste Durchströmöffnung
- 70: Diffusor
- 72: Erste Abschnitt
- 74: Zweiter Abschnitt
- 76: Boden
- 78: Zweite Durchströmöffnung
- 79: Verdämmung
- 80: Filter
- A: Längsachse
- E: Ebene
- H: Hülsenmittelachse
- M: Mittelachse
- S: Strömungsverlauf
- V: Verschieberichtung
- Z: Symmetrieachse

## Patentansprüche

1. Gasgenerator (10) für ein Fahrzeugsicherheitssystem mit einer innerhalb des Gasgenerators (10) positionierten Hülse (60), die erste Durchströmöffnungen (68) hat und eine einen ersten Treibstoff (50) aufweisende Anzündkammer (52) umschließt, wobei sich außerhalb an der Hülse (60) eine mit einem zweiten Treibstoff (54) befüllte Brennkammer (56) anschließt, welche von einem innerhalb des Gasgenerators (10) gelegenen Diffusor (70), der zweite Durchströmöffnungen (78) hat, umgeben ist, und mit einem Leitblech (12), das dritte Durchströmöffnungen (14) hat und den Diffusor (70) umgibt, wobei die Hülse (60) als ein im Wesentlichen hohlzylindrisches Bauteil mit einer stirnseitigen ersten Öffnung (61) und einer axial dazu gegenüberliegenden zweiten Öffnung (63) ausgebildet ist, wobei die erste Öffnung (61) durch den Diffusor (70) verschlossen ist und die Hülse (60) an ihrer zweiten Öffnung (63) durch einen Halter (46) verschlossen ist, **dadurch gekennzeichnet, dass** die Hülse, der Diffusor (70) und das Leitblech (12) miteinander stoffschlüssig verbunden sind und die Hülse (60) in einer Verschieberichtung (V), weg von dem Halter (46), an dem Halter (46) verschiebbar ist, derart dass Bereiche des Diffusors (70) und des Leitblechs (12) zusammen mit der Hülse (60) als eine Baueinheit in der Verschieberichtung (V) verschiebbar sind.

2. Gasgenerator (10) nach Anspruch 1,
**dadurch gekennzeichnet, dass**
die Hülse (60), der Diffusor (70) und das Leitblech (12) durch eine einzige Schweißverbindung (15) oder durch mehrere Schweißverbindungen, insbesondere eine erste Schweißverbindung (17) und eine zweite Schweißverbindung (18), verbunden sind, wobei vorzugsweise die Schweißverbindungen (15, 17, 18) als radial umlaufende Schweißverbindungen ausgebildet ist.

3. Gasgenerator (10) nach einem der voranstehenden Ansprüche ,
**dadurch gekennzeichnet, dass**
eine Verdämmung (79) zwischen Diffusor (70) und Hülse (60) positioniert ist.

4. Gasgenerator (10) nach Anspruch 3,
**dadurch gekennzeichnet, dass**
der Halter (46) einen Anzünder (40) aufnimmt.

5. Gasgenerator (10) nach einem der voranstehenden Ansprüche,
**dadurch gekennzeichnet, dass**
eine sich durch die ersten Durchströmöffnungen (68), insbesondere deren Mittelpunkte, radial erstreckende Ebene (E) sich ebenfalls durch die dritten Durchströmöffnungen (14), insbesondere deren Mittelpunkte, erstreckt und die zweiten Durchströmöffnungen (78) von der Ebene (E) beabstandet angeordnet sind.

6. Gasgenerator (10) nach Anspruch 5,
**dadurch gekennzeichnet, dass**
bei einer Aktivierung des Gasgenerators (10) die Hülse (60) mit den ersten Durchströmöffnungen (68) in einer/der Verschieberichtung (V), insbesondere entlang einer Längsachse (A) des Gasgenerators (10), verschoben werden kann, vorzugsweise derart, dass die Ebene (E) außerhalb der dritten Durchströmöffnungen (14), insbesondere zwischen den dritten und zweiten Durchströmöffnungen (14, 78), positioniert ist.

7. Gasgenerator (10) nach einem der voranstehenden Ansprüche,
**dadurch gekennzeichnet, dass**
die Hülse (60) einen sich im Wesentlichen radial erstreckenden ersten Hülsenabschnitt (62) hat, der an einem Boden (76) des Diffusors (70) innenseitig stoffschlüssig verbunden ist und der in einen sich zur Hülsenmittelachse (H) hin verjüngenden konusförmigen zweiten Hülsenabschnitt (64) übergeht, an den sich ein zur Hülsenmittelachse (H) im Wesentlichen parallel verlaufender dritter Hülsenabschnitt (66) anschließt, welcher insbesondere die ersten Durchströmöffnungen (68) aufweist.

8. Gasgenerator (10) nach einem der voranstehenden Ansprüche,
**dadurch gekennzeichnet, dass**
das Leitblech (12) von einem Verschlussboden (30) verschlossen ist und mit diesem einen Bereich des Außengehäuses des Gasgenerators (10) ausbildet und der Verschlussboden (30) zusammen mit dem Diffusor (70) und der Hülse (60) die Brennkammer (56) umschließen, insbesondere derart, dass die Brennkammer (56) als eine toroidförmige Kammer ausgebildet ist, die im Längsschnitt betrachtet vorzugsweise im Wesentlich parallel zueinander ausgerichtete Seitenwände zu dem Verschlussboden (30) hinweisend hat, welche in Richtung von dem Verschlussboden (30) wegweisend in schräg zueinander zulaufende Seitenwände übergehen.

9. Gasgenerator (10) nach Anspruch 8,
**dadurch gekennzeichnet, dass**
das Leitblech (12) mit dem Verschlussboden (30) und dem Diffusor (70) mittels einer einzigen, insbesondere radial umlaufenden, Verschweißung (38) verbunden ist und/oder die Brennkammer (56) eine Symmetrieachse (Z) aufweist, welche durch die zweiten Durchströmöffnungen (78), insbesondere deren Mittelpunkte, im Wesentlichen parallel zur Längsachse (A) des Gasgenerators (10) verläuft.

10. Gasgenerator (10) nach einem der voranstehenden Ansprüche,
**dadurch gekennzeichnet, dass**
das Leitblech (12) topfförmig ausgebildet ist und einen zylinderförmigen ersten Wandabschnitt (22) hat, an den sich ein konusförmiger nach radial innen verengender zweiter Wandabschnitt (24) anschließt, welcher in einen Bodenabschnitt (20) im Wesentlichen senkrecht zur Längsachse (A) des Gasgenerators (10) übergeht, wobei das Leitblech (12) vorzugsweise eine Vertiefung (21) im Bodenabschnitt (20) und/oder die dritten Durchströmöffnungen (14) als schlitzartige im Wesentlichen rechteckförmige Öffnungen aufweist.

11. Gasgenerator (10) nach einem der voranstehenden Ansprüche,
**dadurch gekennzeichnet, dass**
der Diffusor (70) topfförmig ausgebildet ist und einen zylinderförmigen ersten Abschnitt (72) hat, an den sich ein konusförmiger nach radial innen verengender zweiter Abschnitt (74) anschließt, welcher in einen/den Boden (76) des Diffusors (70) im Wesentlichen senkrecht zur Längsachse (A) des Gasgenerators (10) übergeht und die zweiten Durchströmöffnungen (78) aufweist.

12. Gasgenerator (10) nach einem der voranstehenden Ansprüche,
**dadurch gekennzeichnet, dass**
das Leitblech (12) und der Diffusor (70) eine topfförmige Gasleitkammer (58) umschließen und/oder über den gesamten Bereich der/einer Gasleitkammer (58) im Wesentlichen parallel zueinander verlaufen, die/eine Vertiefung (21) des Leitblechs (12) davon ausgenommen.

13. Gasgenerator (10) nach einem der voranstehenden Ansprüche,
**dadurch gekennzeichnet, dass**
im Aktivierungsfall des Gasgenerators (10) ein in der Anzündkammer (52) gebildetes Gas nur in radialer Richtung durch die ersten Durchströmöffnungen (68) der Hülse (60) in die Brennkammer (56) einströmen und ein in der Brennkammer (56) gebildetes Gas nur in axialer Richtung durch die zweiten Durchströmöffnungen (78) des Diffusors (70) in die/eine Gasleitkammer (58) einströmen kann.

14. Gassackmodul mit einem Gasgenerator (10), einem von dem Gasgenerator (10) aufblasbaren Gassack und einer Befestigungseinrichtung zur Anbringung des Gassackmoduls an einem Fahrzeug,
**dadurch gekennzeichnet, dass**
der Gasgenerator (10) nach zumindest einem der Ansprüche 1 bis 13 ausgebildet ist.

15. Fahrzeugsicherheitssystem zum Schutz einer Person, beispielsweise eines Fahrzeuginsassen oder Passanten, mit einem Gasgenerator (10), einem von diesem aufblasbaren Gassack, als Teil eines Gassackmoduls, und einer elektronischen Steuereinheit, mittels der der Gasgenerator (10) bei Vorliegen einer Auslösesituation aktivierbar ist,
**dadurch gekennzeichnet, dass**
der Gasgenerator (10) nach zumindest einem der Ansprüche 1 bis 13 ausgebildet ist.

## Claims

1. A gas generator (10) for a vehicle safety system, comprising a sleeve (60) positioned inside the gas generator (10) which has first flow orifices (68) and encloses an ignition chamber (52) including a first propellant (50), wherein at the outside of the sleeve (60) there is connected a combustion chamber (56) filled with a second propellant (54) which is surrounded by a diffusor (70) located inside the gas generator (10) and having second flow orifices (78), and comprising a baffle plate (12) which has third flow orifices (14) and surrounds the diffusor (70), wherein the sleeve (60) is in the form of a substantially hollow-cylindrical component having a front-side first opening (61) and an axially opposed second opening (63), wherein the first opening (61) is closed by the diffusor (70) and the sleeve (60) is closed at its second opening (63) by a holder (46), **characterized in that** the sleeve (60), the diffusor (70) and the baffle plate (12) are adhesively bonded to each other and that the sleeve (60) can be displaced in a displacing direction (V) away from the holder (46), along the holder (46) such that areas of the diffusor (70) and of the baffle plate (12) can be displaced along with the sleeve (60) as a structural unit in the displacing direction (V).

2. The gas generator (10) according to claim 1,
**characterized in that**
the sleeve (60), the diffusor (70) and the baffle plate (12) are connected by one single welded joint (15) or by plural welded joints, especially a first welded joint (17) and a second welded joint (18), the welded joints (15, 17, 18) being preferably configured as radially circumferential welded joints.

3. The gas generator (10) according to any one of the preceding claims,
**characterized in that**
a tamping (79) is positioned between the diffusor (70) and the sleeve (60).

4. The gas generator (10) according to claim 3,
**characterized in that**
the holder (46) receives an igniter (40).

5. The gas generator (10) according to any one of the preceding claims, **characterized in that**
a plane (E) radially extending through the first flow orifices (68), especially the centers thereof, equally extends through the third flow orifices (14), especially the centers thereof, and the second flow orifices (78) are arranged to be spaced apart from the plane (E).

6. The gas generator (10) according to claim 5,
**characterized in that,**
upon activation of the gas generator (10) the sleeve (60) including the first flow orifices (68) can be displaced in a/the displacing direction (V), especially along a longitudinal axis (A) of the gas generator (10), preferably in such a way that the plane (E) is positioned outside the third flow orifices (14), especially between the third and the second flow orifices (14, 78).

7. The gas generator (10) according to any one of the preceding claims, **characterized in that**
the sleeve (60) has a substantially radially extending first sleeve portion (62) which is adhesively bonded to the inside of a bottom (76) of the diffusor (70) and which is transformed into a conical second sleeve portion (64) tapering toward the sleeve center axis (H) to which a third sleeve portion (66) extending substantially in parallel to the sleeve center axis (H) is connected, which includes especially the first flow orifices (68).

8. The gas generator (10) according to any one of the preceding claims, **characterized in that**
the baffle plate (12) is closed by a closure bottom (30) and with the latter forms an area of the outer housing of the gas generator (10) and the closure bottom (30) together with the diffusor (70) and the sleeve (60) enclose the combustion chamber (56) especially such that the combustion chamber (56) is configured as a toroidal chamber which, when viewed in the longitudinal section, preferably has sidewalls substantially aligned in parallel to each other and facing the closure bottom (30), the sidewalls being transformed, in the direction facing away from the closure bottom (30), into sidewalls converging relative to each other.

9. The gas generator (10) according to claim 8,
**characterized in that**
the baffle plate (12) is connected to the closure bottom (30) and the diffusor (70) by means of one single, especially radially circumferential, weld (38) and/or the combustion chamber (56) includes an axis of symmetry (Z), which extends through the second flow orifices (78), especially the centers thereof, substantially in parallel to the longitudinal axis (A) of the gas generator (10).

10. The gas generator (10) according to any one of the preceding claims, **characterized in that**
the baffle plate (12) is pot-shaped and has a cylindrical first wall portion (22) to which a conical radially inwardly narrowing second wall portion (24) is connected which is transformed into a bottom portion (20) substantially perpendicularly to the longitudinal axis (A) of the gas generator (10), wherein the baffle plate (12) preferably includes a recess (21) in the bottom portion (20) and/or the third flow orifices (14) as slot-shaped substantially rectangular orifices.

11. The gas generator (10) according to any one of the preceding claims, **characterized in that**
the diffusor (70) a pot-shaped and has a cylindrical first portion (72) to which a conical radially inwardly narrowing second portion (74) is connected which is transformed into a/the bottom (76) of the diffusor (70) substantially perpendicularly to the longitudinal axis (A) of the gas generator (10) and includes the second flow orifices (78).

12. The gas generator (10) according to any one of the preceding claims, **characterized in that**
the baffle plate (12) and the diffusor (70) enclose a pot-shaped gas guiding chamber (58) and/or extend substantially in parallel to each other over the entire area of the/a gas guiding chamber (58), with the exception of the/a recess (21) of the baffle plate (12).

13. The gas generator (10) according to any one of the preceding claims, **characterized in that**
in the case of activation of the gas generator (10), gas formed in the ignition chamber (52) can flow into the combustion chamber (56) only in the radial direction through the first flow orifices (68) of the sleeve (60), and a gas formed in the combustion chamber (56) can flow into the/a gas guiding chamber (58) only in the axial direction through the second flow orifices (78) of the diffusor (70).

14. An airbag module comprising a gas generator (10), an airbag inflatable by the gas generator (10) and a fastening device for attaching the airbag module to a vehicle,
**characterized in that**
the gas generator (10) is configured according to at least one of the claims 1 to 13.

15. A vehicle safety system for protecting a person such as a vehicle occupant or a pedestrian comprising a gas generator (10), an airbag inflatable by the latter as part of an airbag module, and an electronic control unit by means of which the gas generator (10) can be activated when a release situation is given,
**characterized in that**
the gas generator (10) is configured according to at least one of the claims 1 to 13.

## Revendications

1. Générateur de gaz (10) pour un système de sécurité de véhicule avec un manchon (60) positionné à l'intérieur du générateur de gaz (10), qui possède des premières ouvertures de passage (68) et qui entoure une chambre d'allumage (52) présentant un premier propergol (50), pour lequel une chambre de combustion (56) remplie d'un deuxième propergol (54) se raccorde à l'extérieur du manchon (60), laquelle est entourée d'un diffuseur (70) situé à l'intérieur du générateur de gaz (10), qui possède des deuxièmes ouvertures de passage (78), et avec un déflecteur (12) qui possède des troisièmes ouvertures de passage (14) et qui entoure le diffuseur (70), pour lequel le manchon (60) est réalisé sous la forme d'un composant essentiellement cylindrique creux avec une première ouverture (61) du côté frontal et une deuxième ouverture (63) opposée axialement à la première, pour lequel la première ouverture (61) est fermée par le diffuseur (70) et le manchon (60) est fermé au niveau de sa deuxième ouverture (63) par un support (46), **caractérisé en ce que en ce que** le manchon (60), le diffuseur (70) et le déflecteur (12) sont reliés entre eux par une liaison de matière à matière et le manchon (60) peut être déplacé sur le support (46) dans une direction de déplacement (V), en s'éloignant du support (46), de telle sorte que des zones du diffuseur (70) et du déflecteur (12) peuvent être déplacées conjointement avec le manchon (60) sous la forme d'un assemblage dans la direction de déplacement (V).

2. Générateur de gaz (10) selon la revendication 1,
**caractérisé en ce que**
le manchon (60), le diffuseur (70) et le déflecteur (12) sont reliés par un seul assemblage soudé (15) ou par plusieurs assemblages soudés, en particulier un premier assemblage soudé (17) et un deuxième assemblage soudé (18), les assemblages soudés (15, 17, 18) étant de préférence réalisés sous forme d'assemblages soudés périphériques radiaux.

3. Générateur de gaz (10) selon l'une des revendications précédentes,
**caractérisé en ce que**
un opercule (79) est positionnée entre le diffuseur (70) et le manchon (60).

4. Générateur de gaz (10) selon la revendication 3,
**caractérisé en ce que**
le support (46) reçoit un allumeur (40).

5. Générateur de gaz (10) selon l'une des revendications précédentes,
**caractérisé en ce que**
un plan (E) s'étendant radialement à travers les premières ouvertures de passage (68), notamment leurs points centraux, s'étend également à travers les troisièmes ouvertures de passage (14), notamment leurs points centraux, et les deuxièmes ouvertures de passage (78) sont disposées à distance du plan (E).

6. Générateur de gaz (10) selon la revendication 5,
**caractérisé en ce que**
lors d'une activation du générateur de gaz (10), le manchon (60) avec les premières ouvertures de passage (68) peut être déplacé dans une/le sens de déplacement (V), en particulier le long d'un axe longitudinal (A) du générateur de gaz (10), de préférence de telle sorte que le plan (E) soit positionné à l'extérieur des troisièmes ouvertures de passage (14), en particulier entre les troisièmes et deuxièmes ouvertures de passage (14, 78).

7. Générateur de gaz (10) selon l'une des revendications précédentes,
**caractérisé en ce que**
le manchon (60) a un premier tronçon de manchon (62) s'étendant sensiblement radialement, qui est relié à un fond (76) du diffuseur (70) du côté intérieur par une liaison de matière à matière et qui se transforme en un deuxième tronçon de manchon (64) de forme conique se rétrécissant vers l'axe médian (H) du manchon, auquel se raccorde un troisième tronçon de manchon (66) s'étendant sensiblement parallèlement à l'axe médian (H) du manchon, qui présente en particulier les premières ouvertures de passage (68).

8. Générateur de gaz (10) selon l'une des revendications précédentes,
**caractérisé en ce que**
le déflecteur (12) est fermé par un fond de fermeture (30) et forme avec celui-ci une zone du boîtier extérieur du générateur de gaz (10) et le fond de fermeture (30) entoure la chambre de combustion (56) avec le diffuseur (70) et le manchon (60), en particulier de telle manière que la chambre de combustion (56) est réalisée sous la forme d'une chambre toroïdale qui, vue en coupe longitudinale, a de préférence des parois latérales orientées sensiblement parallèlement les unes aux autres en direction du fond de fermeture (30), qui se transforment en parois latérales se terminant en oblique les unes par rapport aux autres en direction opposée au fond de fermeture (30).

9. Générateur de gaz (10) selon la revendication 8,
**caractérisé en ce que**
le déflecteur (12) est relié au fond de fermeture (30) et au diffuseur (70) au moyen d'une seule soudure (38), en particulier périphérique radiale, et/ou la chambre de combustion (56) présente un axe de symétrie (Z) qui s'étend à travers les deuxièmes ouvertures de passage (78), en particulier leurs centres, essentiellement parallèlement à l'axe longitudinal (A) du générateur de gaz (10).

10. Générateur de gaz (10) selon l'une des revendications précédentes,
**caractérisé en ce que**
le déflecteur (12) est en forme de pot et a une première section de paroi (22) cylindrique, à laquelle se raccorde une deuxième section de paroi (24) conique se rétrécissant radialement vers l'intérieur, qui se transforme en une section de fond (20) essentiellement perpendiculaire à l'axe longitudinal (A) du générateur de gaz (10), pour lequel le déflecteur (12) présente de préférence un renfoncement (21) dans la section de fond (20) et/ou présente les troisièmes ouvertures de passage (14) sous forme d'ouvertures en forme de fentes essentiellement rectangulaires.

11. Générateur de gaz (10) selon l'une des revendications précédentes,
**caractérisé en ce que**
le diffuseur (70) est en forme de pot et possède une première section (72) de forme cylindrique, à laquelle se raccorde une deuxième section (74) de forme conique se rétrécissant radialement vers l'intérieur, qui se transforme en un/un fond (76) du diffuseur (70) essentiellement perpendiculaire à l'axe longitudinal (A) du générateur de gaz (10) et qui présente les deuxièmes ouvertures de passage (78).

12. Générateur de gaz (10) selon l'une des revendications précédentes,
**caractérisé en ce que**
le déflecteur (12) et le diffuseur (70) entourent une chambre de guidage du gaz (58) en forme de pot et/ou s'étendent sensiblement parallèlement l'un à l'autre sur toute la zone de la/d'une chambre de guidage de gaz (58), à l'exception du/d'un renfoncement (21) du déflecteur (12).

13. Générateur de gaz (10) selon l'une des revendications précédentes,
**caractérisé en ce que**
en cas d'activation du générateur de gaz (10), un gaz formé dans la chambre d'allumage (52) ne peut s'écouler dans la chambre de combustion (56) qu'en direction radiale à travers les premières ouvertures de passage (68) du manchon (60) et un gaz formé dans la chambre de combustion (56) ne peut s'écouler dans la/une chambre de guidage de gaz (58) qu'en direction axiale à travers les secondes ouvertures de passage (78) du diffuseur (70).

14. Module airbag comprenant un générateur de gaz (10), un coussin gonflable pouvant être gonflé par le générateur de gaz (10) et un dispositif de fixation pour monter le module airbag sur un véhicule,
**caractérisé en ce que**
le générateur de gaz (10) est réalisé selon au moins l'une des revendications 1 à 13.

15. Système de sécurité pour véhicule destiné à protéger une personne, par exemple un passager du véhicule ou un passant, comprenant un générateur de gaz (10), un coussin gonflable pouvant être gonflé par celui-ci, en tant que partie d'un module airbag, et une unité de commande électronique au moyen de laquelle le générateur de gaz (10) peut être activé en présence d'une situation de déclenchement,
**caractérisé en ce que**
le générateur de gaz (10) est réalisé selon au moins l'une des revendications 1 à 13.
